# EUROPÄISCHE PATENTSCHRIFT

(11) **EP 1 562 058 B1**
(45) Veröffentlichungstag und Bekanntmachung des Hinweises auf die Patenterteilung: **21.03.2007**
(21) Anmeldenummer: 04002607.2
(22) Anmeldetag: 05.02.2004
(51) Int. Cl.: G02B 6/38, H01R 13/627

(54) **Steckverbindung für einen Laserlichtleitkabelstecker**
Plug-and-socket connection for a laser light cable connector
Liasion par enfichage pour un connecteur de câble à transmission de laser

(43) Veröffentlichungstag der Anmeldung: 10.08.2005
(73) Patentinhaber: TRUMPF Laser GmbH + Co. KG, 78713 Schramberg (DE)
(72) Erfinder: Bonna, Ulrich, 78647 Trossingen (DE); Fuchs, Stefan, 78661 Böhringen (DE)
(74) Vertreter: Kohler Schmid Möbus

(56) Entgegenhaltungen:
- EP-A- 0 113 206
- EP-A- 0 254 233
- EP-A- 0 798 580
- DE-A- 3 401 391
- US-A- 119 276
- US-A- 2 860 893
- US-A- 4 213 482
- US-A- 5 462 316
- US-A- 5 550 944

## Beschreibung

Die vorliegende Erfindung betrifft eine Lichtleiter-Steckverbindung gemäß Oberbegriff von Patentanspruch 1.

Eine derartige Steckverbindung ist beispielsweise durch die US-A-5 550 944 bekannt geworden.

Derzeitig werden die Stecker von Lichtleitkabeln für die Übertragung von Laserlichtleistungen im Multikilowattbereich überwiegend zylindrisch ausgeführt (zylindrischer Stecker in zylindrischer Bohrung). Die Klemmung des Steckers erfolgt entweder durch Verspannen in der Steckeraufnahme, welche hierzu geschlitzt und freigespart ist, oder durch ein Klemmelement (z.B. Prisma), welches in einer radialen Freisparung der Steckeraufnahme sitzt und auf den zylindrischen Stecker drückt. Folgende Nachteile treten hierbei auf:
- Um den Stecker fügen zu können, wird ein gewisses Spiel benötigt, welches wiederum dazu führt, dass die Lage des Steckers in der Steckeraufnahme auch im geklemmten Zustand um dieses Spiel undefiniert sein kann. Ein gewisses Durchmesser/Längenverhältnis der Steckverbindung wird benötigt, um die Auswirkungen des Steckerspiels so weit zu unterdrücken, dass es keine funktionsbeeinträchtigenden Einflüsse hat.
- Die Klemmung ist nicht rotationssymmetrisch, so dass der Stecker sich während des Klemmvorgangs undefiniert verschieben kann.
- Es werden Werkzeuge zur Betätigung der Klemmelemente benötigt.
- Die Klemmelemente (z.B. Klemmschrauben) sind meist nur von einer bestimmten Seite her bedienbar (eingeschränkte Zugänglichkeit).
- Es ist nicht immer sichergestellt, dass der Stecker axial in seiner Anschlagpositon ist, wenn er geklemmt ist.
- Die Klemmung basiert auf Kraftschluss. Die Qualität der Klemmung wird durch Temperaturunterschiede, die unterschiedliche Längenausdehnungen der betroffenen Bauteile verursachen, negativ beeinflusst.
- Das Fließverhalten der verwendeten Materialien unter permanentem Krafteinfluss kann die Qualität dieser Steckerklemmungen negativ beeinträchtigen.

Neben diesen Bauformen sind Steckersysteme mit Zentrierkonus und einer Überwurfhülse mit Renkverbindung (Bajonettverschluss mit Verriegelungsnut) als Verriegelung bekannt. Auch diese Systeme weisen Nachteile auf:
- Beim Fügen der Steckerteile muss die Überwurfhülse in einer definierten Position zum Gegenstück stehen, um "eingefädelt" werden zu können.
- Bei diesen Verbindungen ist die Kraft, mit der am Stecker gezogen werden darf, ohne eine funktionale Beeinträchtigung der Steckverbindung hervorzurufen, kleiner als die Federvorspannkraft der Renkverbindung. Für eine einigermaßen sichere Verbindung muss daher eine sehr starke Feder vorgesehen werden. Um trotzdem ein leichtes Bedienen der Überwurfhülse zu ermöglichen, ist eine flache Steigung der Verriegelungsnut und somit ein großer Betätigungsweg der Hülse erforderlich.

Die Verriegelung muss den Stecker spielfrei und reproduzierbar unter einer definierten Vorspannkraft im Gegenstück (Steckeraufnahme) halten, um eine einwandfreie Funktion ohne große Verluste der Strahlqualität zu gewährleisten. Die Verriegelung sollte so ausgestaltet sein, dass sie ohne Werkzeug getätigt werden kann. Des Weiteren sollten die zum Betätigen der Verriegelung notwendige Kraft und der notwendige Betätigungsweg so ausgelegt sein, dass eine einfache Bedienung durch ungeschultes Personal und ggf. einhändig möglich ist.

Bei der aus US-A-5 550 944 bekannten Steckverbindung weisen der Stecker auf seiner Außenfläche eine Umfangsnut mit halbkreisförmigem Nutquerschnitt und die Steckbuchse sich radial nach innen verjüngende Radialbohrungen auf, in denen Kugeln unverlierbar gehalten sind. Bei verriegelter Steckverbindung sind die Kugeln durch einen Innenkonus (Konuswinkel ca. 45°) einer auf der Buchse verschiebbar angeordneten Verriegelungshülse in der Umfangsnut des Steckers und den Radialbohrungen der Steckbuchse festgeklemmt.

Es ist die Aufgabe der vorliegenden Erfindung, eine Steckverbindung der eingangs genannten Art dahingehend weiterzubilden, dass der Stecker spielfrei und reproduzierbar unter einer definierten Vorspannkraft im Gegenstück (Steckeraufnahme) gehalten wird und selbst eine große auf den Stecker entgegen der Steckrichtung wirkende Zugkraft nicht zum Entriegeln der Steckverbindung führt.

Diese Aufgabe wird erfindungsgemäß durch eine Lichtleiter-Steckverbindung mit den Merkmalen von Patentanspruch 1 gelöst.

Die erfindungsgemäße Steckverbindung bildet ein Schnellkuppelsystem zur sicheren mechanischen Verbindung und Verriegelung des Laserlichtleitkabelsteckers in der Steckeraufnahme einer entsprechenden Buchse, welche zum Beispiel Teil einer Einoder Auskopplungseinrichtung oder einer Bearbeitungsoptik des Laserlichts ist. Die Qualität der Verriegelung ist unabhängig von der Betätigungskraft. Auch das Fließverhalten von Werkstoffen oder auftretende Maßänderungen bei Temperaturänderungen haben keinerlei negative Auswirkung auf die Qualität der Verriegelung und somit auf die Qualität der Steckverbindung. Durch ein entsprechend gewähltes Verhältnis des Innenkonuswinkels der Verriegelungshülse zum Außenkonuswinkel des Steckers übt eine axial auf die Verriegelungshülse wirkende geringe Kraft, welche dementsprechend auch nur eine geringe Gegenkraft zum Lösen der Steckerverriegelung erfordert, eine relativ große in Steckrichtung auf den Stecker wirkende Kraft aus, mit der der Stecker in Anlage an die Buchse gedrückt wird. Ein geeignetes Konuswinkelverhältnis sorgt auch dafür, dass in dem Verriegelungssystem Selbsthemmung bzw. Verkeilung entsteht, so dass selbst eine große auf den Stecker entgegen der Steckrichtung wirkende Zugkraft nicht zum Entriegeln der Steckverbindung führt. So kann durch die geschickte Wahl der beiden Konuswinkel eine einfache Bedienbarkeit bei gleichzeitig sicherer Klemmung erreicht werden.

Der Innenkonus der Verriegelungshülse kann sich entgegen der Steckrichtung oder in Steckrichtung verjüngen. Die letztere Variante hat den Vorteil, dass die Verriegelungshülse in ihre Freigabestellung in Steckrichtung verschoben werden muss und daher die Verriegelung nicht versehentlich durch Ziehen am Laserlichtleiterkabel entgegen der Steckrichtung gelöst wird.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine erste Ausführungsform der erfindungsgemäßen Steckverbindung in einem Längsschnitt;
- Fig. 2: eine Detailansicht der Steckverbindung gemäß II in Fig. 1; und
- Fig. 3: eine zweite Ausführungsform der erfindungsgemäßen Steckverbindung in einer Darstellung analog zu Fig. 2.

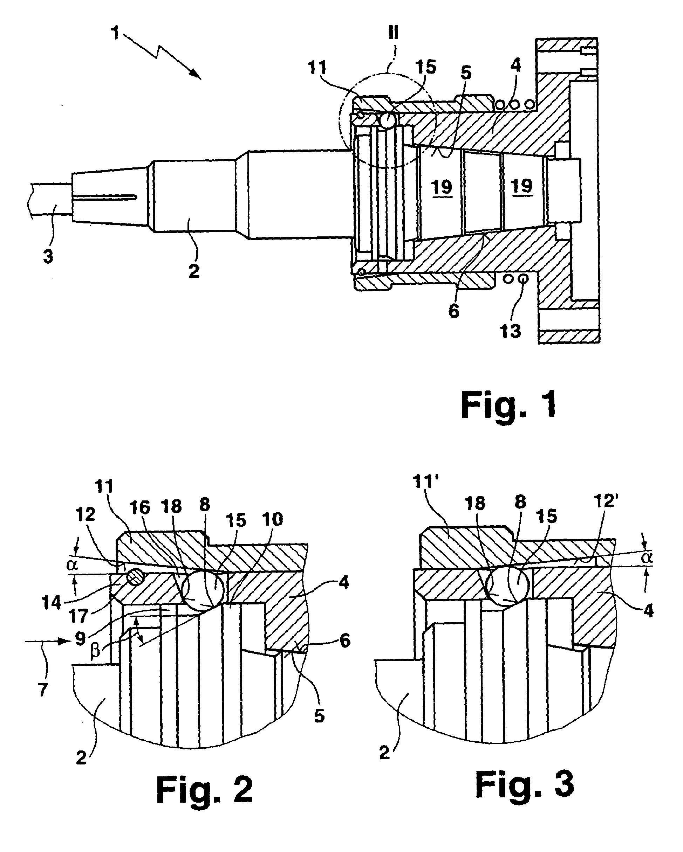

Die in **Fig. 1** gezeigte Steckverbindung **1** umfasst einen Laserlichtleiterkabelstecker **2** an einem Laserlichtleiterkabel **3** und eine Buchse **4** mit konischer Steckeraufnahme **5**.

Wie in **Fig. 2** gezeigt, weist der Stecker 2 einen konischen Steckabschnitt **6** und einen sich entgegen der Steckrichtung **7** verjüngenden Außenkonus **8** (Konuswinkel **β**) auf, der axial zwischen zwei Ringvorsprüngen **9, 10** angeordnet ist. Außen auf der Buchse 4 ist eine Verriegelungshülse **11** mit Innenkonus **12** (Konuswinkel **α**) axial verschiebbar zwischen einer Freigabe- und einer Verriegelungsstellung gelagert und durch eine Druckfeder **13** in die in Fig. 2 gezeigte Verriegelungsstellung vorgespannt. In einem hülsenförmigen Ansatz **14** der Buchse 4 sind mehrere Kugeln **15** radial verschiebbar gelagert, mittels denen der Stecker 2 in der Buchse 4 verriegelt wird. Die Kugeln 15 sind in sich nach innen verjüngenden Radialbohrungen **16** des hülsenförmigen Ansatzes 14 verschiebbar geführt. Die Kugeln 15 bzw. die Radialbohrungen 16 sind idealerweise äquidistant über den Umfang der Buchse 4 angeordnet. Der Durchmesser der Radialbohrungen 16 ist am inneren Umfang des hülsenförmigen Ansatzes 14 kleiner als der Kugeldurchmesser, so dass die Kugeln 15 nicht nach innen durchfallen können, wenn der Stecker 2 nicht gesteckt ist. Nach außen hin werden die Kugeln 15 durch die Verriegelungshülse 11 in den Radialbohrungen 16 gehalten. Der axiale Weg der Verriegelungshülse 11 wird auf der einen Seite durch die axial wirkende Druckfeder 13, die gegen einen Bund abgestützt ist, und auf der anderen Seite durch ein Sicherungselement **17** (z.B. Runddrahtsicherungsring, Sprengring) so beschränkt, dass die Kugeln 15 nicht nach außen aus den Radialbohrungen 16 herausfallen können.

Soll der Stecker 2 in die Buchse 4 gesteckt werden, wird zunächst die Verriegelungshülse 11 gegen die Druckfeder 13 in seine Freigabestellung (in Fig. 2 nach rechts) verschoben. Gleichzeitig wird der Stecker 2 in die Buchse 4 bis zur Anlage seines konisches Steckabschnitts 6 an der konische Steckeraufnahme 5 eingeschoben, wobei die Kugeln 15 vom Ringvorsprung 10 radial nach außen geschoben werden. Nach Loslassen der Verriegelungshülse 11 drückt die Druckfeder 13 die Verriegelungshülse 11 in die Verriegelungsstellung, wodurch die am Innenkonus 12 anliegenden Kugeln 15 radial nach innen in Anlage sowohl an den Außenkonus 8 des Steckers 2 als auch entgegen der Steckrichtung 7 an die Wand (Anschlag **18**) der Radialbohrung 16 gedrückt werden. Am Außenkonus 8 wird die radiale Kraft der Kugeln 15 auch in eine in Steckrichtung 7 wirkende Komponente umgesetzt, so dass der konische Steckabschnitt 6 in Anlage an die konische Steckeraufnahme 4 gedrückt wird. In dieser Verriegelungsstellung der Verriegelungshülse 11 sind die Kugeln 15 jeweils zwischen dem Innenkonus 12 der Verriegelungshülse 11, dem Außenkonus 8 des Steckers 2 und dem Anschlag 18 der Buchse 4 festgeklemmt. Es erfolgt also gleichzeitig eine radial und axial spielfreie Klemmung des Steckabschnitts 6 in der Steckeraufnahme 5. Durch die beiden Ringvorsprünge 9, 10 ist der Stecker 2 auch innerhalb der Öffnung des hülsenförmigen Ansatzes 14 zentriert, was die spielfreie Halterung unterstützt.

Durch ein entsprechend gewähltes Verhältnis des Innenkonuswinkels *α* der Verriegelungshülse 11 zum Außenkonuswinkel β des Steckers 2 übt eine geringe axial auf die Verriegelungshülse 11 wirkende Federkraft, welche dementsprechend auch nur eine geringe Gegenkraft zum Lösen der Steckerverriegelung erfordert, eine relativ große in Steckrichtung 7 auf den Stecker 2 wirkende Kraft aus, mit welcher der Stecker 2 in Anlage an die Buchse 4 gedrückt wird. Ein geeignetes Konuswinkelverhältnis sorgt auch dafür, dass in dem Verriegelungssystem Selbsthemmung bzw. Verkeilung entsteht, so dass selbst eine große auf den Stecker 2 entgegen der Steckrichtung 7 wirkende Zugkraft nicht zum Entriegeln der Steckverbindung 1 führt. Vorzugsweise beträgt der Innenkonuswinkel α ca. 6° - 7° und der Außenkonuswinkel β ca. 45°.

Zum Lösen der Steckverbindung 1 wird die Verriegelungshülse 11 wieder in seine Freigabestellung verschoben, und der Stecker 2 kann aus der Buchse 4 gezogen werden, wobei die Kugeln 15 vom Ringvorsprung 10 radial nach außen geschoben werden.

Der Stecker 2, die Buchse 4, die Verriegelungshülse 11 und die Kugeln 15 bestehen vorzugsweise aus gehärtetem, nichtrostendem Stahl, und die jeweiligen Laufflächen sind idealerweise geschliffen. Durch die Ausbildung als rotationssymmetrische Hülse ist die Verriegelungshülse 11 von allen Seiten aus bedienbar.

Der Steckabschnitt 6 liegt, wie in Fig. 1 gezeigt, an der konischen Steckeraufnahme 5 nicht auf seiner gesamten Länge an, sondern nur über zwei axial beabstandete konische Abschnitte **19**, die als axialer Anschlag des Steckers 2 dienen. Der Stecker 2 liegt also in Steckrichtung 7 an zwei axial beabstandeten Stellen an der Steckeraufnahme 6 an, was die spielfreie Halterung unterstützt.

Von der in Fig. 2 gezeigten Steckverbindung unterscheidet sich die in **Fig. 3** gezeigte Ausführungsform bei gleicher Funktionsweise lediglich dadurch, dass sich der Innenkonus **12'** der Verriegelungshülse **11'** entgegen der Steckrichtung 7 verjüngt und die Verriegelungshülse 11' daher in seine Freigabestellung beispielsweise gegen die Wirkung einer Zugfeder nach links geschoben wird.

## Patentansprüche

1. Lichtleiter-Steckverbindung (1), umfassend einen Lichtleiter-Stecke (2) und eine Lichtleiter buchse (4) wobei der Lichtleiter stecker (2) eine sich entgegen der Steckrichtung (7) verjüngende zum Einstecken in die Lichtleiter-Buchse aufweist Außenanlagefläche, und wobei die Lichtleiter-Buchse (4) mehrere radial verschiebbar gelagerte. kugeln (15) aufweist, sowie eine Verriegelungshülse (11 ; 11'), die auf der Buchsen gehäuse außenfläche (4) axial verschiebbar zwischen einer Freigabe- und einer Verriegelungsstellung angeordnet ist und einen Innenkonus (12, 12') mit ebener Mantelfläche aufweist, wobei die Kugeln (15) jeweils in sich radial nach innen verjüngende durchgehenden Radialbohrungen (16) der Buchse (4), deren innenseitiger Durchmesser kleiner als der Durchmesser der Kugeln (15) ist, angeordnet sind und nach außen durch die Verriegelungshülse (11; 11') zurückgehalten werden, wobei in der Verriegelungsstellung der Verriegelungshülse (11; 11') die Kugeln (15) jeweils zumindest zwischen dem Innenkonus (12; 12') der Verriegelungshülse (11; 11'), der Außenanlagefläche des in Steckrichtung (7) in der Buchse (4) anliegenden Steckers (2) und entgegen der Steckrichtung (7) an einem Anschlag (18) in den Radialbohrungen der Buchse (4) festgeklemmt sind, und wobei die Verriegelungshülse (11; 11') manuell aus ihrer Verriegelungsstellung gegen die Wirkung einer Rückstellfeder (13) in die Freigabestellung verschiebbar ist,
**dadurch gekennzeichnet,**
**dass** die Außenanlagefläche des Steckers (2) durch einen Außenkonus (8) mit ebener Mantelfläche gebildet ist, dass der Konuswinkel (α) des Innenkonus (12; 12') kleiner als ca. 15°, vorzugsweise kleiner als ca. 10° ist und besonders bevorzugt ca. 6° bis ca. 7° beträgt, **dass** der Konuswinkel (β) des Außenkonus (8) des Steckers (2) zwischen ca. 30° und ca. 60°, vorzugsweise ca. 45° beträgt, und dass in der Verriegelungsstellung der Verriegelungshülse (11; 11') die Kugeln (15) ausschließlich zwischen Innenkonus (12; 12'), Außenkonus (8) und Anschlag (18) festgeklemmt sind.

2. Lichtleiter-Steckverbindung nach Anspruch 1, **dadurch gekennzeichnet, dass** der Innenkonus (12) des Verriegelungselements (11) sich in Steckrichtung (7) verjüngt.

3. Lichtleiter-Steckverbindung nach Anspruch 1, **dadurch gekennzeichnet, dass** der Innenkonus (12') des Verriegelungselements (11') sich entgegen der Steckrichtung (7) verjüngt.

## Claims

1. Light guide plug connection (1), comprising a light guide connector (2) and a light guide socket (4), the light guide connector (2) having an outer contact face which tapers counter to the insertion direction (7) for insertion into the light guide socket and the light guide socket (4) having a plurality of balls (15) which are supported in a radially displaceable manner, and a locking sleeve (11; 11') which is arranged on the outer face of the housing of the socket (4) so as to be axially displaceable between a release position and a locking position and which has an inner cone (12, 12') having a planar lateral surface, with the balls (15) each being arranged in radially inwardly tapering radial through-holes (16) of the socket (4) whose inside diameter is smaller than the diameter of the balls (15), and being retained in an outward direction by the locking sleeve (11; 11'), with the balls (15) each being clamped in the radial holes of the socket (4), in the locking position of the locking sleeve (11; 11'), at least between the inner cone (12; 12') of the locking sleeve (11; 11') and the outer contact face of the connector (2) which is adjacent in the insertion direction (7) in the socket (4) and counter to the insertion direction (7) against a stop (18), and the locking sleeve (11; 11') being able to be displaced manually out of the locking position thereof into the release position counter to the action of a return spring (13),
**characterised in that**
the outer contact face of the connector (2) is formed by an outer cone (8) having a planar lateral surface, **in that** the cone angle (α) of the inner cone (12; 12') is less than approximately 15°, preferably less than approximately 10°, and particularly preferably is from approximately 6° to approximately 7°, **in that** the cone angle (β) of the outer cone (8) of the connector (2) is between approximately 30° and approximately 60°, preferably approximately 45°, and **in that** the balls (15) are clamped, in the locking position of the locking sleeve (11; 11'), only between the inner cone (12; 12'), outer cone (8) and stop (18).

2. Light guide plug connection according to claim 1, **characterised in that** the inner cone (12) of the locking element (11) tapers in the insertion direction (7).

3. Light guide plug connection according to claim 1, **characterised in that** the inner cone (12') of the locking element (11') tapers counter to the insertion direction (7).

## Revendications

1. Connexion enfichable pour fibre optique (1) comprenant une fiche de fibre optique (2) et une douille de fibre optique (4), la fiche de fibre optique (2) présentant une surface d'appui extérieure se rétrécissant en sens inverse du sens d'enfichage (7), à enficher dans la douille de fibre optique, et la douille de fibre optique (4) présentant plusieurs billes (15) déplaçables radialement, ainsi que comprenant un manchon de verrouillage (11 ; 11') qui est déplaçable axialement sur la surface extérieure du boîtier de douille (4) entre une position de déblocage et une position de verrouillage et présente un cône intérieur (12, 12') à surface d'enveloppe plane, les billes (15) étant disposées dans des trous radiaux (16) traversants de la douille (4) se rétrécissant chacun radialement vers l'intérieur dont le diamètre intérieur est plus petit que le diamètre des billes (15) et étant retenues vers l'extérieur par le manchon de verrouillage (11 ; 11'), sachant que dans la position de verrouillage du manchon de verrouillage (11 ; 11') les billes (15) sont bloquées chacune au moins entre le cône intérieur (12, 12') du manchon de verrouillage (11 ; 11'), la surface d'appui extérieure de la fiche (2) en appui dans la douille (4) dans le sens d'enfichage (7) et contre une butée (18) dans les trous radiaux de la douille (4) en sens inverse du sens d'enfichage (7), et le manchon de verrouillage (11 ; 11') étant déplaçable manuellement de sa position de verrouillage dans la position de déblocage contre l'action d'un ressort de rappel (13),
**caractérisée par le fait**
**que** la surface d'appui extérieure de la fiche (2) est formée par un cône extérieur (8) à surface d'enveloppe plane, que l'angle de cône (α) du cône intérieur (12 ; 12') est inférieur à environ 15°, de préférence inférieur à environ 10° et de manière particulièrement préférée compris entre environ 6° et environ 7°, que l'angle de cône (β) du cône extérieur (8) de la fiche (2) est compris entre environ 30° et environ 60°, de préférence égal à environ 45°, et que dans la position de verrouillage du manchon de verrouillage (11 ; 11') les billes (15) sont bloquées exclusivement entre cône intérieur (12 ; 12'), cône extérieur (8) et butée (18).

2. Connexion enfichable pour fibre optique selon la revendication 1, **caractérisée par le fait que** le cône intérieur (12) de l'élément de verrouillage (11) se rétrécit dans le sens d'enfichage.

3. Connexion enfichable pour fibre optique selon la revendication 1, **caractérisée par le fait que** le cône intérieur (12') de l'élément de verrouillage (11') se rétrécit en sens inverse du sens d'enfichage.
